# EUROPEAN PATENT APPLICATION

(11) **EP 4 579 588 A1**
(43) Date of publication of application: **02.07.2025**
(21) Application number: 24223616.4
(22) Date of filing: 30.12.2024
(51) Int. Cl.: G06T 7/00, G06T 7/11

(54) **WALLBOARD DEFECT DETECTION VIA MACHINE LEARNING**

(30) Priority: 29.12.2023 US 202363616166 P
(71) Applicant: Fluke Corporation, Everett, WA 98203 (US)
(72) Inventor: WILSON, James Craig, Everett, 98203 (US); HORNSBLOW, Robert Alan, Everett, 98203 (US); HOLLIDAY, Stuart Andrew, Everett, 98203 (US); JOHNSON, Neil, Everett, 98203 (US)
(74) Representative: HGF

(57) **Abstract**

In one aspect, a defect detection system for detecting wallboard defects includes an imaging device, a board detection system, a machine-learned defect detection model, and a corrective action instruction system. The imaging device is configured to scan a wallboard and generate imaging data for respective pixels of the wallboard. The board detection system is configured to process the imaging data and to detect and localize individual board images within the imaging data. The machine-learned defect detection model is configured to process the individual board images, the machine-learned defect detection model having been trained to generate board classification data indicative of one or more classifications associated with the wallboard. The corrective action instruction system is configured to generate one or more corrective action instructions relative to the wallboard based on the board classification data generated by the machine-learned defect detection model.

## Description

### FIELD

The present disclosure relates generally to systems and methods for detecting defects in wallboards. In particular, the present disclosure is related to a machine-learned defect detection model configured to detect and classify wallboard defects based on thermal image scans of wallboards during the manufacturing process.

### BACKGROUND

Wallboards are a vital component for construction applications, particularly in the construction of flat surfaces forming interior walls and/or ceilings for modem structures including homes, offices, and other buildings. Wallboards can include a variety of particular types including but not limited to plasterboards, gypsum boards, drywall, sheetrock, and the like. Quality control features can be implemented to help ensure structural integrity and uniformity of wallboards in the manufacturing process.

Current systems are limited in their ability to accurately and reliably detect and classify defects in wallboards during the manufacturing process in real-time. Certain existing solutions rely on fixed algorithms that have proven unable to cope with the varied and unpredictable nature of defects that may arise in wallboards. This has resulted in unrecognized defects not being detected, impacting the quality control process and potentially leading to defective products being shipped to customers. Furthermore, certain current systems require manual inspection of thermal images, which is labor-intensive, error-prone, and impractical for real-time quality control. Additionally, existing board detection algorithms are not robust enough to handle different appearances seen after product release, thereby further impacting the defect detection performance.

Accordingly, an improved defect detection system and method that addresses one or more of the above issues is desired and would be appreciated in the art.

### SUMMARY

Aspects and advantages of systems and methods for wallboard defect detection via machine learning will be set forth in part in the following description, or may be obvious from the description, or may be learned through practice of the technology.

In accordance with one embodiment, the present disclosure is directed to a defect detection system for detecting wallboard defects. The defect detection system includes an imaging device, a board detection system, a machine-learned defect detection model, and a corrective action instruction system. The imaging device is configured to scan a wallboard and generate imaging data for respective pixels of the wallboard. The board detection system is configured to process the imaging data and to detect and localize individual board images within the imaging data. The machine-learned defect detection model is configured to process the individual board images, the machine-learned defect detection model having been trained to generate board classification data indicative of one or more classifications associated with the wallboard. The corrective action instruction system is configured to generate one or more corrective action instructions relative to the wallboard based on the board classification data generated by the machine-learned defect detection model.

In accordance with another embodiment, the present disclosure is directed to a computer-implemented method for detecting wallboard defects. The computer-implemented method includes accessing imaging data obtained from an imaging device configured to scan a wallboard. The computer-implemented method includes processing the imaging data with a machine-learned defect detection model, the machine-learned defect detection model having been trained to generate board classification data indicative of one or more classifications associated with the wallboard. The computer-implemented method includes generating one or more corrective action instructions relative to the wallboard based on the board classification data generated by the machine-learned defect detection model.

In accordance with another embodiment, the present disclosure is directed to a computing system that includes one or more processors and one or more memory devices that store instructions that are executable by the one or more processors to implement operations. The operations include accessing imaging data obtained from an imaging device configured to scan a wallboard. The operations include processing the imaging data with a machine-learned defect detection model, the machine-learned defect detection model having been trained to generate board classification data indicative of one or more classifications associated with the wallboard. The operations include generating one or more corrective action instructions relative to the wallboard based on the board classification data generated by the machine-learned defect detection model.

In accordance with another embodiment, the present disclosure is directed to one or more non-transitory computer-readable media that store instructions that are executable by one or more processors to implement operations. The operations include accessing imaging data obtained from an imaging device configured to scan a wallboard. The operations include processing the imaging data with a machine-learned defect detection model, the machine-learned defect detection model having been trained to generate board classification data indicative of one or more classifications associated with the wallboard. The operations include generating one or more corrective action instructions relative to the wallboard based on the board classification data generated by the machine-learned defect detection model.

These and other features, aspects and advantages of the present wallboard defect detection systems and methods will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present wallboard defect detection systems and methods, including the best mode of making and using the present systems and methods, directed to one of ordinary skill in the art, is set forth in the specification, which makes reference to the appended figures, in which:
FIG. 1 illustrates a wallboard manufacturing system in which a wallboard defect detection system can be integrated in accordance with an exemplary aspect of the present disclosure;
FIG. 2 illustrates a defect detection system in accordance with embodiments of the present disclosure;
FIG. 3 illustrates a board detection system of a defect detection system in accordance with embodiments of the present disclosure;
FIG. 4 illustrates a machine-learned defect detection model of a defect detection system in accordance with embodiments of the present disclosure;
FIG. 5 illustrates aspects of a training data labeling process for generating training data for training a machine-learned defect detection model in accordance with embodiments of the present disclosure;
FIG. 6 illustrates aspects of a supervised training process for training a machine-learned defect detection model in accordance with embodiments of the present disclosure;
FIG. 7 illustrates aspects of a supervised training process for retraining a machine-learned defect detection model in accordance with embodiments of the present disclosure;
FIG. 8 illustrates an example data flow within a defect detection system in accordance with embodiments of the present disclosure;
FIG. 9 illustrates example thermal imaging data and detected board images of a defect detection system in accordance with embodiments of the present disclosure;
FIG. 10 illustrates example board classification data of a defect detection system in accordance with embodiments of the present disclosure;
FIG. 11 is a flow diagram of a method of detecting wallboard defects in accordance with embodiments of the present disclosure;
FIG. 12 is a flow diagram of a method of detecting boards within thermal imaging data in accordance with embodiments of the present disclosure; and
FIG. 13 is a flow diagram of a method of supervised training of a machine-learned defect detection model in accordance with embodiments of the present disclosure; and
FIG. 14 illustrates a computing system in accordance with embodiments of the present disclosure.

### DETAILED DESCRIPTION

Reference now will be made in detail to example systems and methods for wallboard defect detection via machine learning, one or more examples of which are illustrated in the drawings.

The technical problem that the disclosed technology aims to solve is the inability of current systems to accurately and reliably detect and classify defects in wallboards during the manufacturing process in real-time. Certain existing solutions rely on fixed algorithms that have proven unable to cope with the varied and unpredictable nature of defects that may arise in wallboards. This has resulted in unrecognized defects not being detected, impacting the quality control process and potentially leading to defective products being shipped to customers. Furthermore, certain current systems require manual inspection of thermal images, which is labor-intensive, error-prone, and impractical for real-time quality control. Additionally, existing board detection algorithms are not robust enough to handle different appearances seen after product release, thereby further impacting the defect detection performance.

The technical solution provided by example implementations of the present disclosure lies in the application of machine learning and computer vision techniques to automate the process of detecting and classifying defects in wallboards during their manufacturing process in real-time. This solution overcomes the limitations of previous systems which relied on fixed algorithms and manual inspection.

In the case of defect detection, example implementations of the present disclosure use machine learning models trained on real imagery. Two approaches can be utilized - supervised learning and/or unsupervised learning. In supervised learning, a subject matter expert classifies existing thermal images into different defect types or non-defective. These classified images are then used to train the model for future defect detection. In unsupervised learning, the model is trained to differentiate the atypical from the typical by observing large amounts of 'unfiltered' imagery. This model can then adapt to different board or defect characteristics as the manufacturing process changes.

Embodiments of the present disclosure offer numerous advantages including commercial value and technological benefits. First, the solution offers significant cost savings for wallboard manufacturers by automating the process of defect detection. This reduces the need for manual inspection, which is time consuming and expensive. It also reduces the likelihood of defective products being shipped to customers, which can result in costly returns and damage to the manufacturer's reputation.

Second, the solution enhances the efficiency of the manufacturing process. The machine learning model can be easily retrained or adapted as the manufacturing process changes, allowing the system to continuously improve its defect detection capabilities. This adaptive nature of the system means it can keep pace with changes in product design or manufacturing techniques, ensuring it remains effective and relevant.

Third, the solution could potentially be applied in a number of different contexts. For instance, it could be adapted to other manufacturing processes where real-time defect detection is vital. This could lead to the creation of new products and services, and the entry into new markets.

Some embodiments of the disclosed technology are directed to machine learning-based defect detection on or within wallboards. Defect detection systems associated with such embodiments can be or include a machine-learned defect detection model.

In some embodiments, the machine-learned defect detection model can have been trained using a supervised learning approach for defect detection. For example, supervised model training within a defect detection system can employ labeled training data where a subject matter expert classifies existing thermal images into different defect types or non-defective to generate the training data labels. These classified images are then used to train the machine-learned defect detection model for future defect detection.

In some embodiments, the machine-learned defect detection model can have been trained using an unsupervised learning approach for defect detection. For example, unsupervised model training within a defect detection system can employ techniques to differentiate the atypical from the typical by observing large amounts of 'unfiltered' imagery, consisting mostly of non-defective boards. The machine-learned defect detection model can then adapt to different board or defect characteristics as the manufacturing process changes.

The systems and methods of the present disclosure provide a number of technical effects and benefits. As one example, the present disclosure provides the use of machine learning models (e.g., neural networks) for the purpose of identifying irregular wallboards. As another example, the present disclosure provides the use of machine learning models (e.g., neural networks) for the classification of digital images (e.g., based on pixels of the images) for the purpose of defect detection in wallboards. As another example, the present disclosure provides the use of outputs of machine learning models (e.g., neural networks) for a particular technical application such as, for example, the diversion of defective wallboards from a manufacturing process, or other corrective actions.

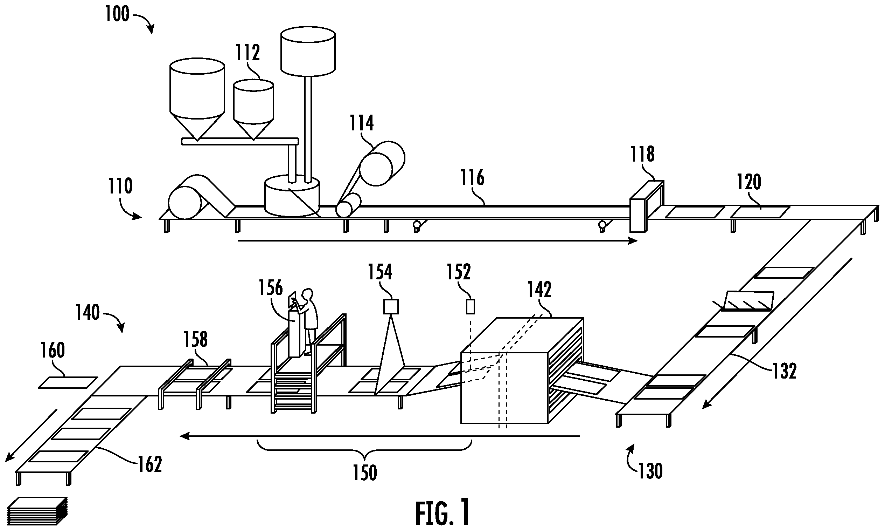

Referring now to the drawings, FIG. 1 illustrates a wallboard manufacturing system in which a wallboard defect detection system can be integrated in accordance with an exemplary aspect of the present disclosure. More particularly, a wallboard manufacturing system 100 can include a first manufacturing segment 110, a second manufacturing segment 130, a third manufacturing segment 140, and a defect detection system 150. It should be appreciated that the defect detection system 150 can be integrated with other wallboard manufacturing systems used to produce wallboards, plasterboards, gypsum boards, drywall, sheetrock, and the like. The particular wallboard manufacturing system 100 depicted in FIG. 1 is for exemplary context and is not intended to limit application of the disclosed defect detection systems and methods. In addition, it should be appreciated that a fewer or greater number of manufacturing segments (e.g., manufacturing segments 110, 130, 140) can be included within wallboard manufacturing system 100 and/or arranged in different configurations.

The first manufacturing segment 110 of wallboard manufacturing system 100 can include a mill area 112, a paper area 114, a wet end area 116, and a knife area 118, which collectively serve to take various raw materials and assemble them into individual wallboards 120. Mill area 112 can include respective stores of milled raw materials for use in the wallboard construction process. For example, mill area 112 can include one or more receptacles configured to dispense respective raw materials at particular dispense rates or in particular amounts. Mill area 112 can include a first receptacle configured to disperse a base board material such as crushed natural gypsum, synthetic gypsum, or other material, a second receptacle configured to disperse one or more additives and/or framing agents, and a third receptacle configured to disperse water. Materials dispensed from the receptacles within mill area 112 can be mixed together in an aggregation receptacle to form a slurry which is fed between continuous layers of paper provided by paper area 114 of the wallboard manufacturing system 100. The first manufacturing segment 110 includes a first long board conveyer portion for receiving the slurry from mill area 112 as well as a first continuous paper layer and a second continuous paper layer from paper area 114. Application control circuits and various sensors (e.g., material volume sensors, material flow rate sensors, paper roll speed sensors, etc.) can be associated with the receptacles of mill area 112 and/or the continuous paper layers of paper area 114 to dynamically adjust one or more steps or parameters of the manufacturing process used to produce a wallboard based on outputs of the disclosed defect detection systems and methods.

Referring still to FIG. 1, combined materials from the mill area 112 and paper area 114 are relayed within the first manufacturing segment 110 to a wet end area 116 which includes an elongated span of wallboard. The elongated span proceeds from wet end area 116 to knife area 118, where the elongated span of wallboard is cut into individual wallboards 120.

Individual wallboards 120 can then transition from the first manufacturing segment 110 to the second manufacturing segment 130, which shifts the conveyance of individual wallboards 120 from a first direction to a second direction within the assembly line of wallboard manufacturing system 100. Second manufacturing segment 130 can include a second long board conveyer portion configured to function as a wet transfer table 132. Wet transfer table 132 can relay individual wallboards 120 from their assembly location within first manufacturing segment 110 to a drying and inspection location within third manufacturing segment 140. Wet transfer table can also be configured to arrange individual wallboards into drying sets (e.g., sets of two, three, four, six, eight or other number of wallboards per set) for relay into board dryer 142 of the third manufacturing segment 140. The board dryer 142 of FIG. 1 illustrates pairs of two wallboards being dried at a time and subsequently analyzed by the disclosed wallboard defect detection system. However, individual wallboards 120 or sets of other numbers of wallboards can be dried and analyzed as described herein.

Third manufacturing segment 140 of the wallboard manufacturing system 100 can include the board dryer 142, defect detection system 150 (including sensor(s) 152, imaging device 154, and/or workstation 156), customized cut area 158, waste area 160, and bundler area 162. Additional discussion of defect detection system 150, including the sensor(s) 152, imaging device 154, and computing systems within workstation 156, which may be implemented in an automated fashion or with optional input from a workstation operator) will be provided relative to the remaining figures.

Defect detection system 150 serves to provide real-time inspection of finished wallboards 120 which can be used to implement one or more corrective action instructions should defects be detected. In one embodiment, a corrective action instruction can include instructions for customized cutting of the wallboards 120 within customized cut area 158. For example, portions of a wallboard 120 that include a defect can be cut off from or otherwise repaired within the wallboard at custom cut area 158 or other remedial location within the wallboard manufacturing system 100. In another embodiment, a corrective action instruction can include instructions for disposing of a wallboard determined to have an irreparable defect, such as execution of instructions for controlling various mechanical or robotic components (e.g., actuators, belts, etc.) to automatically convey the defective wallboard to a certain are (e.g., waste area 160). In another embodiment, a corrective action instruction can include instructions for controlling various mechanical or robotic components (e.g., actuators, belts, etc.) to automatically divert a wallboard 120 into an inspection area for further inspection or analysis. In another embodiment, a corrective action instruction can include instructions for displaying a graphical prompt or graphical element to a user (e.g., a user of the workstation 156) to prompt or otherwise notify the user of a detected defect. In another embodiment, a corrective action instruction can include instructions for causing a visual, textual, or audio alarm when a defect is detected. For example, an email, SMS, or other notification can be sent to a different computing device or system when a defect is detected. In yet another example, a user may be able to define runs for defect handling. For example, "if 5 out of the last 10 boards have blisters, raise an alarm". The corrective action instructions can be generated according to sch user-defined rules or logic.

If no corrective action instruction is needed (e.g., based on a determination that a wallboard 120 is normal or defect-free), then third manufacturing segment 140 can be configured to convey the non-defective wallboard from the defect detection system 150 to the bundler area 162, where multiple inspected wallboards can be bundled for further processing, packaging, or subsequent transport.

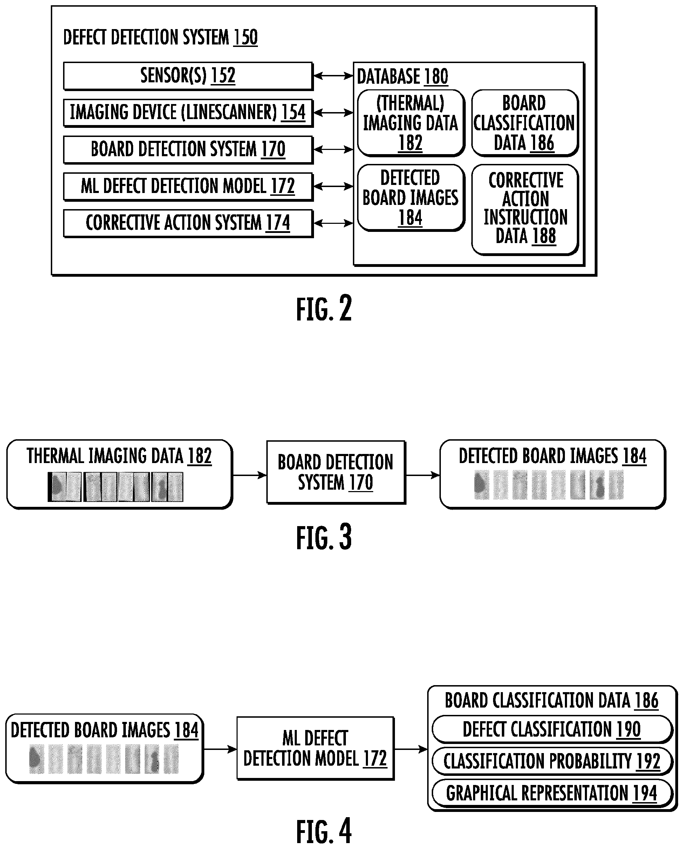

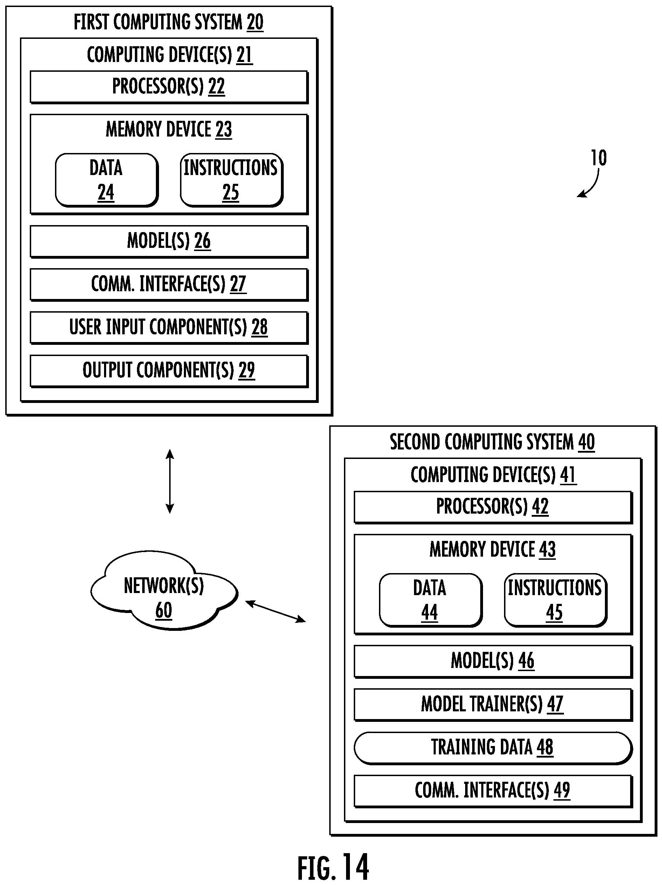

Referring now to FIG. 2, defect detection system 150 in accordance with embodiments of the present disclosure is described in additional detail. In some embodiments, defect detection system 150 can include one or more sensors 152, an imaging device 154, a board detection system 170, a machine-learned defect detection model 172, a corrective action instruction system 174, and a database 180. Database 180 can store data associated with one or more operations executed by the defect detection system, such data including but not limited to (thermal) imaging data 182, detected board images 184, board classification data 186, and corrective action instruction data 188. One or more portions of defect detection system 150, including but not limited to board detection system 170, machine-learned defect detection model 172, corrective action instruction system 174, and/or database 180 depicted in FIG. 2 can be implemented by a computing system comprising one or more computing devices or processors, such as computing system 10 depicted in and described with reference to FIG. 14.

Sensor(s) 152 can be provided at various locations within a wallboard manufacturing system such as wallboard manufacturing system 100 of FIG. 1. For example, as illustrated, sensor(s) 152 can be provided at a point where wallboards 120 are exiting the board dryer 142. In other embodiments, one or more additional sensors can be provided before board dryer 142, with the imaging device 154, or at any other location within the various manufacturing segments. In one example, sensor(s) 152 can include a temperature sensor configured to obtain temperature measurements associated with a wallboard or its surrounding environment, a pressure sensor configured to obtain pressure levels associated with a wallboard or its surrounding environment, a moisture sensor configured to measure dielectric permittivity for determining water content of the wallboard or surrounding environment, a compensation sensor for calibrating one or more components of the defect detection system 150, or any other sensor that could provide helpful data for use in conjunction with the disclosed defect detection techniques.

Imaging device 154 can be provided as part of the subject defect detection system and positioned downstream from the board dryer 142. In some embodiments, imaging device 154 is configured to scan a wallboard 120 and generate imaging data associated with the wallboard. For instance, imaging device 154 can be configured to obtain data values for respective pixels of a two-dimensional scan of the wallboard 120. A two-dimensional scan obtained by imaging device 154 can correspond to a surface area of the wallboard 120 including all pixels or other portions measured at locations corresponding to a length and width of the wallboard surface area. The imaging data generated by imaging device 154 can be stored as imaging data 182 in a database 180 associated with defect detection system 150.

In some embodiments, imaging device 154 can correspond to a thermal imaging device configured to obtain thermal imaging data (e.g., per-pixel temperature values) for a surface of wallboard 120. For example, imaging device 154 can include an infrared linescanner. An infrared linescanner or other suitable thermal imaging device can be effective for temperature measurement and non-contact continuous monitoring of wallboards 120 as they are automatically conveyed through the wallboard manufacturing system 100. Thermal linescanning implemented by imaging device 154 can occur at scan speeds of up to 300 Hz (e.g., in a range of 100-300 Hz or lines per second). Each line of data obtained by thermal imaging device 154 can include up to 1,024 data points per line scan (e.g., in a range of between 500 and 5,000 data points per line scan) such that each spot/pixel on the target surface is over sampled up to three times, providing complete coverage of a wallboard 120. In some embodiments, functionality of imaging device 154 can provide optical resolution on an order of up to 200:1, as defined by the ratio of the size of the measuring spot on a wallboard 120 to the distance between the imaging device 154 and the wallboard 120. Imaging device 154 can also include a number of additional features for electrical interfacing and communication among other devices, such as a built-in Ethernet TCP/IP that accommodates connection with an existing network. In some embodiments, imaging device 154 can include an internal line laser for rapid alignment, while built-in water cooling, air purge features, and/or other components can be included to help maintain functional operation of the imaging device.

Referring now to FIG. 3, board detection system 170 can be included as an optional component of defect detection system 150. Board detection system 170 can be configured to receive (thermal) imaging data 182 generated by imaging device 154 and process the imaging data to detect and localize individual board images within the imaging data. Accordingly, board detection system 170 can be configured to generate an output indicative of individual boards scanned by imaging device 154. In some embodiments, the output of board detection system 170 can be or can include detected board images 184.

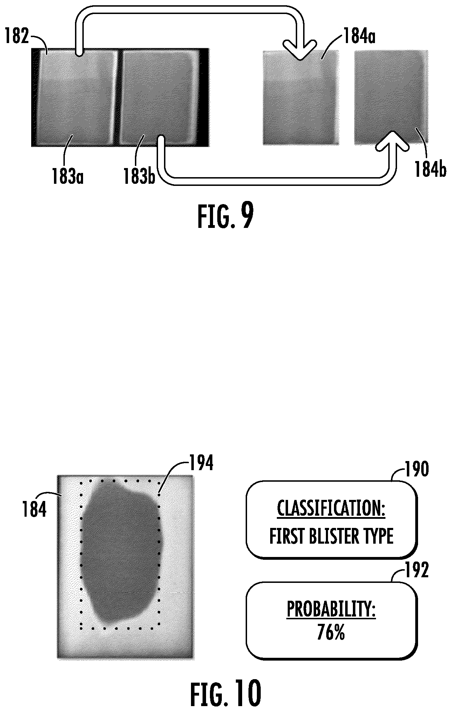

An example of imaging data 182 provided as input to board detection system 170 and detected board images 184 received as output from board detection system 170 is depicted in FIG. 9. For example, a first portion of imaging data 182 can include a visual representation of thermal image scanning for a set of two wallboards corresponding to first board 183a and second board 183b that were positioned adjacent to one another as conveyed through board dryer 142 and under imaging device 154 on the conveyer of third manufacturing segment 140. The imaging data 182 including imaging data associated with first board 183a and second board 183b is processed by the board detection system 170. The board detection system 170 is configured to generate respective detected board images 184a and 184b, where detected board image 184a is a detected and localized segment of imaging data corresponding to first board 183a, and detected board image 184b is a detected and localized segment of imaging data corresponding to second board 183b. When implemented, generation of the detected board images 184a, 184b within imaging data 182 can facilitate enhanced processing by the machine-learned defect detection model 172 of the defect detection system 150 by providing a higher quality and more reliable input thereto.

With more particular reference to board detection system 170, such system can employ computer vision techniques for highly accurate and robust board detection and localization functionality. As such, in some embodiments, when detected board images 184 generated by board detection system 170 are indicative of board configuration anomalies, corrective action instruction system 174 can be configured to generate corrective action instruction data 188 that instructs one or more components of the system to perform one or more corrective actions. For example, the corrective action instruction system 174 can be configured to generate corrective action instruction data 188 that includes an electronic control signal for the conveyer system and/or other mechanical or robotic components (e.g., actuators, etc.) to divert wallboards to an inspection area. As another example, the corrective action instruction system 174 can be configured to generate corrective action instruction data 188 that includes instructions that cause the display of a graphical prompt or graphical element or cause the implementation of a visual or audio alarm.

Referring now to FIG. 4, machine-learned defect detection model 172 can be included as a component of defect detection system 150. Machine-learned defect detection model 172 can be configured to receive imaging data 182 and/or detected board images 184 generated by board detection system 170 and to process the imaging data 182 and/or detected board images 184 to generate board classification data 186 indicative of one or more classifications associated with a corresponding wallboard 120.

The board classification data 186 can include one or more particular types of classification data indicative of one or more classifications associated with a wallboard. For example, board classification data 186 can include defect classification data 190, classification probability data 192, and graphical representation data 194, as depicted in FIG. 4. In some embodiments, defect classification data 190 can include a binary classification indicative of the wallboard being either defect-free or having a defect. In some embodiments, defect classification data 190 can include a multi-class classification indicative of the wallboard having a particular type of defect from a predefined group of defect types (e.g., a first blister type or a second blister type).

A "blister" can refer to a defect in which one or more layers of the wallboard (e.g., an outermost layer) do not properly or uniformly adhere to one or more other layers (e.g., an underlying layer or core of the wallboard). A blister can result in or be the result of air being trapped between the two layers (e.g., the outer layer and the underlying layer). A first blister type can refer to a larger blister. For example, a first blister type can be characterized by a blister that has a diameter that exceeds some threshold value (e.g., 10 cm). The threshold value can be predefined and/or user-defined. A second blister type can refer to a smaller blister. For example, a second blister type can be characterized by a blister that has a diameter that is smaller than the threshold value (e.g., 10 cm).

In some embodiments, classification probability data 192 can include a quantifiable certainty level or probability value associated with the classification identified in the defect classification data. For example, classification probability data 192 can indicate the likelihood of a particular classification (e.g., a wallboard is determined with 76% probability to have a first blister type defect, or a wallboard is determined to be normal with a certainty level of "likely" or "highly likely", or other numerical or categorical quantifier). In some embodiments, graphical representation data 194 associated with a detected defect can be or include a bounding shape (e.g., a bounding box, bounding ellipse, or other bounding polygon) encompassing the detected defect within the imaging data. An example depiction of board classification data 186 associated with a given board image 184 is illustrated in FIG. 10, which shows defect classification data 190 indicating a defect classification corresponding to a "first blister type" defect, classification probability data 192 corresponding to a 76% probability associated with likelihood of the determined classification, and graphical representation data 194 corresponding to a bounding box around the first blister type defect within the board image 184.

The machine-learned defect detection model 172 may be or include one or more machine-learned models. For example, the machine-learned defect detection model 172 can include one or more neural networks, such as but not limited to a convolutional neural network (CNN). When machine-learned defect detection model 172 comprises a CNN, machine-learned defect detection model 172 can include a plurality of layers configured to extract relevant features from the detected board images 184 provided as input and map them to corresponding classifications (e.g., normal, first defect type, second defect type, etc.), thus enabling accurate image classification based on the imaging data. In some embodiments, the machine-learned defect detection model 172 may include other types of machine-learned models, including non-linear models and/or linear models. Neural networks may include feed-forward neural networks, recurrent neural networks (e.g., long short-term memory recurrent neural networks), deep neural networks, or other forms of neural networks.

The machine-learned defect detection model 172 can be trained according to one or more machine-learning techniques. By way of example, the machine-learned defect detection model 706 can be trained using one or more supervised, unsupervised, reinforcement, etc. learning techniques.

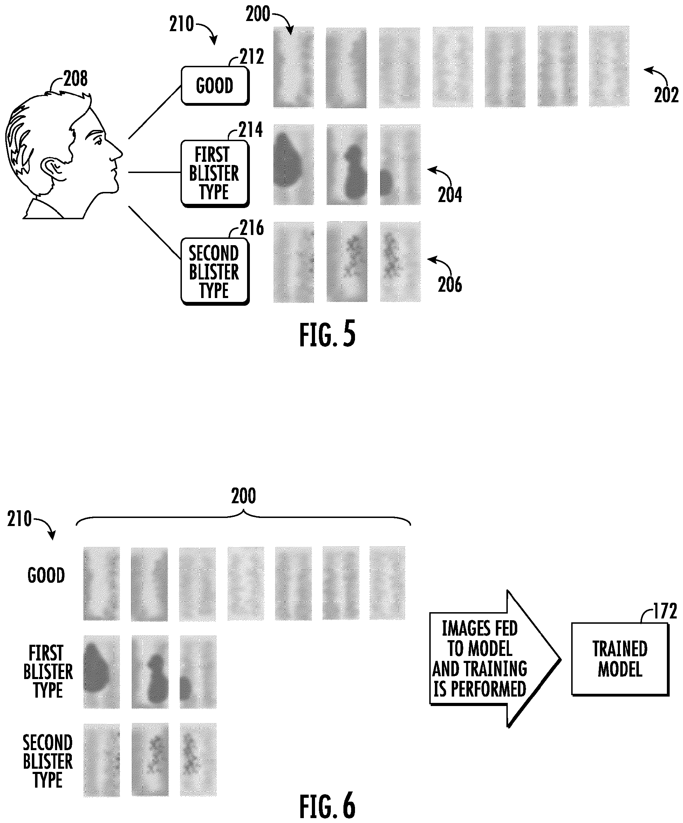

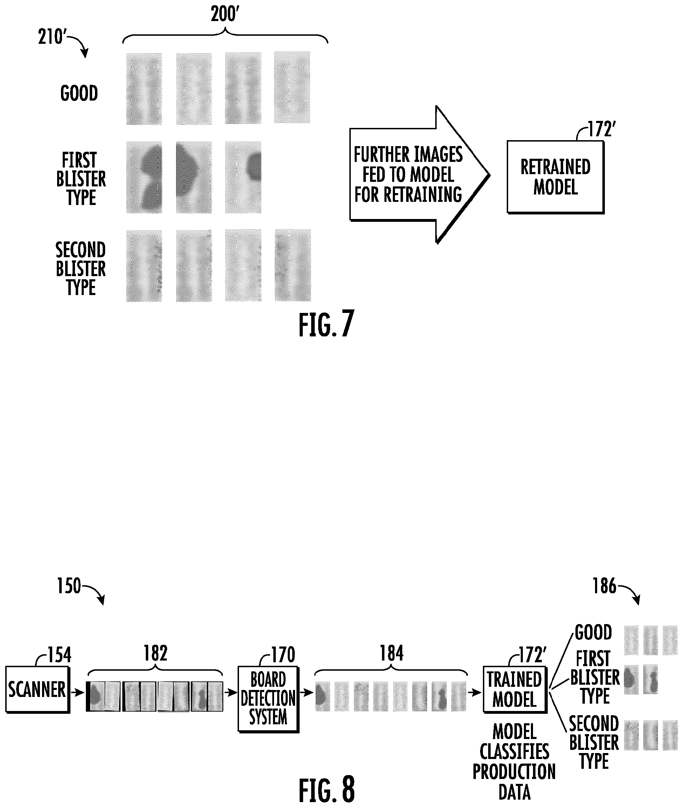

In some implementations, the machine-learned defect detection model 172 can be trained using one or more supervised training techniques based on labeled training data such as depicted in FIG. 5. For instance, at least a portion of labeled training data can be input to the machine-learned defect detection model 172 as depicted in FIG. 6 and the machine-learned defect detection model 172 can be trained through backpropagation of errors based on the labels. Additional updates to the machine-learned defect detection model 172 can be implemented by providing updated portions of labeled training data to the machine-learned defect detection model 172 as depicted in FIG. 7.

Referring now to FIGS. 5-7, aspects of training a machine-learned defect detection model 172 using supervised learning based on a set of training data are depicted. The training data can include pairs of wallboard imaging data (e.g., board image samples 200) and corresponding training labels 210 identifying an associated classification for the wallboard imaging data. For example, labeled training data can be generated by providing a plurality of board image samples 200 to a subject matter expert in wallboard defects who manually or automatically applies a corresponding training label 210. Board image samples 200 can include first samples 202 showing a defect-free wallboard, which can be associated with a corresponding training label 212 of "good." Board image samples 200 can include second samples 204 showing a wallboard having a first type of detected defect, which can be associated with a corresponding training label 214 of "first blister type." Board image samples 200 can include third samples 206 showing a wallboard having a second type of detected defect, which can be associated with a corresponding training label 216 of "second blister type." The training data depicted in FIG. 5 includes thirteen pairs of image samples 200 and corresponding training labels 210, although it should be appreciated that a much larger corpus of training data can be utilized to enhance the robustness of machine-learned defect detection model 172.

The training data including classified images depicted in FIG. 5 can then be provided as input to the machine-learned defect detection model 172 as depicted in FIG. 6. As training data pairs are fed to the machine-learned defect detection model 172, the machine-learned defect detection model 172 can generate a predicted classification for a given image sample 200 corresponding to one of the possible classifications (e.g., good, first blister type, second blister type). The predicted classification generated by the machine-learned defect detection model 172 can then be compared to the training label 210 associated with the image sample 200 to determine the accuracy of the predicted classification. In some embodiments, such comparison can be determined by way of a loss function that can then be used to adjust weights or other parameters within the machine-learned defect detection model 172 (e.g., by backwards propagation of errors or other suitable techniques).

FIG. 7 illustrates aspects of a supervised training process for retraining a machine-learned defect detection model in accordance with embodiments of the present disclosure. Additional updates to the machine-learned defect detection model can be implemented by providing updated portions of labeled training data to the updated machine-learned defect detection model 172' as depicted in FIG. 7. The updated training data can include additional pairs of training data corresponding to updated sample images 200' and corresponding training labels 210'. Should there be a change to the wallboard product or manufacturing process giving rise to different board or defect characteristics, the updated machine-learned defect detection model 172' can easily be retrained to incorporate knowledge of the changes and thus be able to recognize them in routine production.

In some implementations, the machine-learned defect detection model 172 can be trained using one or more unsupervised training techniques. Unsupervised learning may be appropriate when subject matter expert input is not available. Unsupervised learning techniques can be implemented based on a set of training data, wherein the training data comprises unlabeled wallboard imaging data and the machine-learned defect detection model 172 has been trained to identify boards with defects as anomalies relative to non-defective boards. More particularly, defect detection can be treated as anomaly detection, and the machine-learned defect detection model can be trained to differentiate the atypical from the typical by observing a large amount of 'unfiltered' imagery, consisting mostly of non-defective boards. Should the wallboard product or manufacturing process change or new previously unseen defects arise, online adaptation (constant slow learning) will be used to allow the model to adapt to the changing environment.

FIG. 8 illustrates an example data flow within a defect detection system 150 in accordance with embodiments of the present disclosure. After the process of model training is complete, imaging device (e.g., scanner) 154 can be used to generate imaging data 182, which as depicted includes pairs of images corresponding to pairs of wallboards that are scanned as they exit a board dryer. The imaging data 182 is then fed to the board detection system 170 where the scanned images are localized and singulated into detected board images 184. The detected board images 184 are then fed to the trained machine-learned defect detection model 172, where the images are classified. Classified images can then be highlighted as defective or defect free to facilitate quality control for a particular manufacturing process. Furthermore, the detection of defects can be used to automate actions such as the diversion of defective boards into an inspection area, whilst defect occurrence statistics can be used to raise alerts of emerging quality issues and to predict likely failure modes. Results of the processing depicted in FIG. 8 (e.g., one or more of the imaging data 182, the board images 184, and/or the board classification data 186) can also be provided as output to a user on a display device and/or stored in a database (e.g., database 180 of FIG. 2) for historic review and/or subsequent processing.

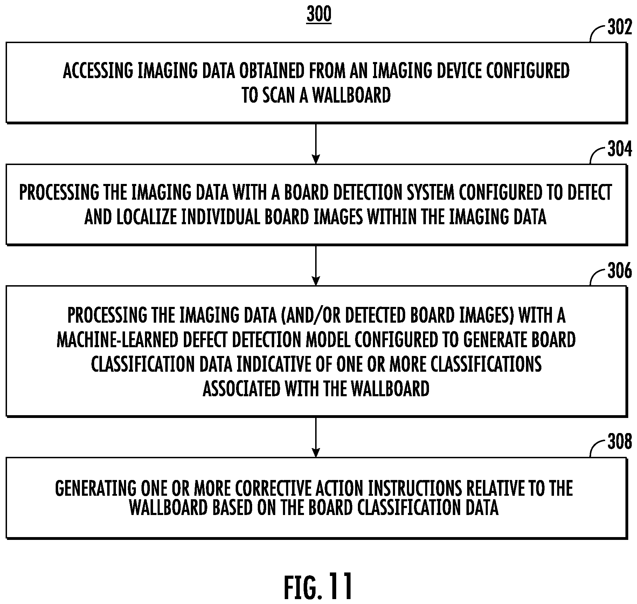

Referring now to FIG. 11, a flow diagram of one embodiment of a method 300 of detecting wallboard defects is illustrated in accordance with embodiments of the present disclosure. In general, the method 300 will be described herein with reference to the defect detection system 150 and related aspects described above with reference to FIGS. 1 through 10. In addition, although FIG. 11 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 11, the method 300 may include at (302) accessing imaging data obtained from an imaging device configured to scan a wallboard. Imaging data accessed at (302) can correspond, for example, to imaging data 182 obtained from imaging device 154 as depicted in FIG. 2. In some implementations, the imaging data accessed at (302) can include thermal imaging data obtained from thermal imaging data obtained from an infrared linescanner. In some implementations, the imaging data accessed at (302) can include temperature values for respective pixels of a two-dimensional scan of the wallboard (e.g., wallboard 120).

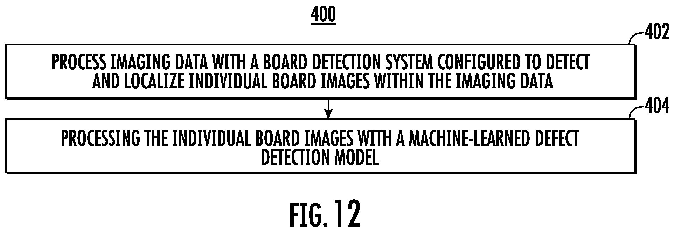

In exemplary implementations, the method 300 may include at (304) processing the imaging data with a board detection system configured to detect and localize individual board images within the imaging data accessed at (302). In some implementations, the board detection system configured to process the imaging data at (304) can correspond to board detection system 170 of FIGS. 2-3. More particular aspects of an exemplary method for processing the image data at (304) with a board detection system are depicted in and discussed with reference to FIG. 12.

Referring still to FIG. 11, in exemplary implementations, the method 300 may include at (306) processing the imaging data accessed at (302) and/or the board images determined at (304) with a machine-learned defect detection model (e.g., machine-learned defect detection model 172 of FIG. 2). The machine-learned defect detection model used to process the imaging data at (306) can have been trained to generate board classification data indicative of one or more classifications associated with the wallboard. As such, based on receipt of the imaging data as input to the machine-learned defect detection model, the machine-learned defect detection model can be configured to generate classification data for the wallboard as output.

In some embodiments of method 300, the machine-learned defect detection model 172 used to process the imaging data at (306) can be or include a convolutional neural network. In some embodiments of method 300, the machine-learned defect detection model 172 used to process the imaging data at (306) can have been trained using supervised learning based on a set of training data, wherein the training data comprises pairs of wallboard imaging data and corresponding labels identifying an associated classification for the wallboard imaging data. In some embodiments of method 300, the machine-learned defect detection model 172 used to process the imaging data at (306) can have been trained using unsupervised learning based on a set of training data, wherein the training data comprises unlabeled wallboard imaging data, the machine-learned defect detection model having been trained to identify boards with defects as anomalies relative to non-defective boards.

In some embodiments of method 300, the classification data generated by processing the image data at (306) can correspond to board classification data 186 of FIG. 2, which is indicative of one or more classifications associated with the wallboard. For example, the classification data can include a binary classification indicative of the wallboard being either defect-free or having a defect. In another example, the classification data can include a multi-class classification indicative of the wallboard having a particular type of defect from a predefined group of two or more defect types (e.g., a first blister type defect and/or a second blister type defect). In another example, the classification data can include a classification probability associated with the determined classification indicative of a likelihood of correctness of the predicted classification. In yet another example, the board classification data indicative of one or more classifications associated with the wallboard comprises a graphical representation associated with a detected defect, such as but not limited to a bounding shape encompassing the detected defect within the imaging data.

In exemplary implementations, the method 300 may include at (308) generating one or more corrective action instructions relative to the wallboard based on the board classification data generated by the machine-learned defect detection model at (306). For example, a corrective action instruction relative to the wallboard generated at (308) may include automatically diverting the wallboard into an inspection area, automatically adjusting a step or parameter of a manufacturing process used to produce the wallboard, disposing of a wallboard, triggering an alarm for an operator, user, or system associated with the manufacturing process, etc.

Referring now to FIG. 12, a flow diagram of one embodiment of a method 400 of detecting boards within thermal imaging data is illustrated in accordance with embodiments of the present disclosure. In general, the method 400 will be described herein with reference to the defect detection system 150 and related aspects described above with reference to FIGS. 1 through 10. In addition, although FIG. 12 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 12, method 400 can include at (402) processing imaging data with a board detection system configured to detect and localize individual board images within the imaging data. For example, the board detection system can apply various computer vision approaches or algorithms to detect and localize individual board images.

Method 400 can include at (404) processing the individual board images with the machine-learned defect detection model. For example, the processing of the individual board images can be conducted as described with reference to FIG 11.

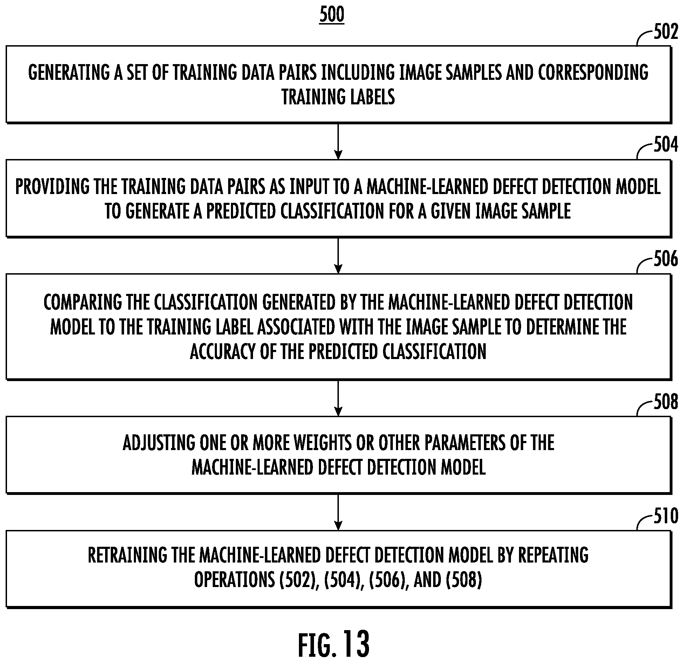

Referring now to FIG. 13, a flow diagram of one embodiment of a method 500 of supervised training of a machine-learned defect detection model (e.g., machine-learned defect detection model 172) is illustrated in accordance with embodiments of the present disclosure. In general, the method 500 will be described herein with reference to the defect detection system 150 and related aspects described above with reference to FIGS. 1 through 10. In addition, although FIG. 13 depicts steps performed in a particular order for purposes of illustration and discussion, the methods discussed herein are not limited to any particular order or arrangement unless otherwise specified in the claims. One skilled in the art, using the disclosures provided herein, will appreciate that various steps of the methods disclosed herein can be omitted, rearranged, combined, and/or adapted in various ways without deviating from the scope of the present disclosure.

As shown in FIG. 13, the method 500 may include at (502) generating a set of training data pairs for use in aspects of training a machine-learned defect detection model 172 using supervised learning techniques. The training data generated at (502) can include pairs of wallboard imaging data (e.g., board image samples 200) and corresponding training labels 210 identifying an associated classification for the wallboard imaging data, as depicted in FIGS. 5-7. For example, training data pairs can be generated at (502) by providing a plurality of board image samples 200 to a subject matter expert in wallboard defects who manually or automatically applies a corresponding training label 210.

In exemplary implementations, the method 500 may include at (504) providing the training data pairs generated at (502) as input to the machine-learned defect detection model 172 as depicted in FIG. 6. As training data pairs are provided at (504) to the machine-learned defect detection model 172, the machine-learned defect detection model 172 can generate a predicted classification for a given image sample 200 corresponding to one of the possible classifications (e.g., good, first blister type, second blister type).

In exemplary implementations, the method 500 may include at (506) comparing the predicted classification generated by the machine-learned defect detection model 172 to the training label 210 associated with the image sample 200 to determine the accuracy of the predicted classification. In some embodiments, the comparing at (506) can be determined by way of a loss function.

In exemplary implementations, the method 500 may include at (508) adjusting weights or other parameters within the machine-learned defect detection model 172 (e.g., by backwards propagation of errors or other suitable techniques).

In exemplary implementations, the method 500 may include at (510) repeating operations (502), (504), (506) and (508) to retrain the machine-learned defect detection model with updated training data. Retraining the machine-learned defect detection model can be implemented by providing updated portions of labeled training data to the updated machine-learned defect detection model 172' as depicted in FIG. 7. The updated training data can include additional pairs of training data corresponding to updated sample images 200' and corresponding training labels 210'. Should there be a change to the wallboard product or manufacturing process giving rise to different board or defect characteristics, the updated machine-learned defect detection model 172' can easily be retrained to incorporate knowledge of the changes and thus be able to recognize them in routine production. Additionally or alternatively, a subject matter expert (e.g., a manufacturing system operator) can override (e.g., in real time as the manufacturing system is operating) a defect detection prediction from the model. This override can be used for retraining. For example, the image captured by the system and the ultimate label or outcome generated by the human expert can be saved as a new training tuple and the model can be retrained on this new training tuple.

FIG. 14 illustrates a block diagram of a computing system 10 that performs wallboard defect detection in accordance with embodiments of the present disclosure. The computing system 10 includes a first computing system 20 and a second computing system 40 that are communicatively coupled over a network 60.

The first computing system 20 may include one or more computing devices 21 or circuitry. For instance, the first computing system 20 may include a processor 22 and a memory device 23. In an embodiment, the processor 22 may include one or more processors (e.g., microprocessors), one or more processing cores, a programmable logic circuit (PLC) or a programmable logic/gate array (PLA/PGA), a field programmable gate array (FPGA), an application specific integrated circuit (ASIC), or any other control circuit. In some implementations, the processor 22 may be programmed by one or more computer-readable or computer-executable instructions stored on the memory device 23.

In an embodiment, the memory device 23 may include one or more non-transitory computer-readable medium, also referred to as a data storage device, which may include an electronic storage device, a magnetic storage device, an optical storage device, an electromagnetic storage device, a semiconductor storage device, or any suitable combination thereof. The memory device 23 may form, e.g., a hard disk drive (HDD), a solid state drive (SDD) or solid state integrated memory, a random access memory (RAM), a read-only memory (ROM), an erasable programmable read-only memory (EPROM or Flash memory), a static random access memory (SRAM), dynamic random access memory (DRAM), a portable compact disc read-only memory (CD-ROM), a digital versatile disk (DVD), and/or a memory stick.

The memory device 23 may store information that may be accessed by the processor 22. For instance, the memory device 23 may store data 24 that can be obtained, received, accessed, written, manipulated, created, and/or stored. The data 24 can include, for instance, any of the data or information described herein, including but not limited to thermal imaging data, detected board images, board classification data, and/or corrective action instruction data. In some implementations, the first computing system 20 can obtain data from one or more memory devices that are remote from the first computing system 20 (e.g., from second computing system 40).

The memory device 23 may also store computer-readable instructions 25 that can be executed by the processor 22. The instructions 25 may be software written in any suitable programming language or can be implemented in hardware. The instructions may include computer-readable instructions, computer-executable instructions, etc. As described herein, in various embodiments, the terms "computer-readable instructions" and "computer-executable instructions" are used to describe software instructions or computer code configured to carry out various tasks and operations. In various embodiments, if the computer-readable or computer-executable instructions form modules, the term "module" refers broadly to a collection of software instructions or code configured to cause the processor 22 to perform one or more functional tasks. The modules and computer-readable/executable instructions may be described as performing various operations or tasks when the processor 22 or other hardware component is executing the modules or computer-readable instructions.

The instructions 25 may be executed in logically and/or virtually separate threads on the processor 22. For example, the memory device 23 can store instructions 25 that when executed by the processor 22 cause the processor 22 to perform any of the operations, methods and/or processes described herein. In some cases, the memory device 23 may store computer-executable instructions or computer-readable instructions, such as instructions to perform at least a portion of the methods of FIGS. 11-14.

In an embodiment, the first computing system 20 may store or include one or more machine-learned models 26. For example, the machine-learned models 26 may be or may otherwise include various machine-learned models, including the machine-learned defect detection model 172. In an embodiment, the machine-learned models 26 may include a supervised learning model (e.g., for detecting wallboard defects) or an unsupervised learning model (e.g., for detecting wallboard defects). In an embodiment, the machine-learned models 26 may include neural networks (e.g., deep neural networks) or other types of machine-learned models, including non-linear models and/or linear models. Neural networks may include feed-forward neural networks, recurrent neural networks (e.g., long short-term memory recurrent neural networks), convolutional neural networks or other forms of neural networks. Some example machine-learned models may leverage an attention mechanism such as self-attention. For example, some example machine-learned models may include multi-headed self-attention models (e.g., transformer models).

In an embodiment, the one or more machine-learned models 26 may be received from the second computing system 40 over one or more networks 60, stored in the first computing system 20 (e.g., in memory device 23), and then used or otherwise implemented by the processor 22. In an embodiment, the first computing system 20 may implement multiple parallel instances of a single model.

Additionally or alternatively, one or more machine-learned models 46 may be included in or otherwise stored and implemented by the second computing system 40 that communicates with the first computing system 20 according to a client-server relationship. For example, the machine-learned models 26 may be implemented by the second computing system 40 as a portion of a web service. Thus, one or more models 26 may be stored and implemented at the first computing system 20 and/or one or more models 46 may be stored and implemented at the second computing system 40.

The first computing system 20 may include a communication interface 27. The communication interface 27 may be used to communicate with one or more other systems. The communication interface 27 may include any circuits, components, software, etc. for communicating via one or more networks (e.g., networks 60). In some implementations, the communication interface 27 may include for example, one or more of a communications controller, receiver, transceiver, transmitter, port, conductors, software and/or hardware for communicating data/information.

The first computing system 20 may also include one or more user input components 28 that receives user input. For example, the may be a touch-sensitive component (e.g., a touch-sensitive display screen or a touch pad) that is sensitive to the touch of a user input object (e.g., a finger or a stylus). The touch-sensitive component may serve to implement a virtual keyboard. Other example user input components include a microphone, a traditional keyboard, cursor-device, joystick, or other devices by which a user (e.g., a vehicle operator, passenger, or other user) may provide user input. User input component(s) 28 may be used, for example, to provide input associated with a tuning parameter or threshold value associated with a machine-learned defect detection model, input associated with corrective action instructions, or other inputs associated with the disclosed wallboard defect detection techniques.

The first computing system 20 may include one or more output components 29. The output components 29 can include hardware and/or software for audibly or visually producing content. For instance, the output components 29 can include one or more speaker(s), earpiece(s), headset(s), handset(s), etc. The output components 29 can include a display device, which can include hardware for displaying a user interface and/or messages for a user. By way of example, the output component 29 can include a display screen, CRT, LCD, plasma screen, touch screen, TV, projector, tablet, and/or other suitable display components.

The second computing system 40 can include one or more computing devices 41. In an embodiment, the second computing system 40 may include or is otherwise implemented by the one or more computing devices 41. In instances in which the second computing system 40 includes plural computing devices (e.g., server computing devices), such computing devices 41 may operate according to sequential computing architectures, parallel computing architectures, or some combination thereof.

The second computing system 40 can include a processor 42 and a memory device 43. In an embodiment, the processor 42 may include one or more processors (e.g., microprocessors), one or more processing cores, a programmable logic circuit (PLC) or a programmable logic/gate array (PLA/PGA), a field programmable gate array (FPGA), an application specific integrated circuit (ASIC), or any other control circuit. In an embodiment, the processor 42 may be programmed by one or more computer-readable or computer-executable instructions stored on the memory device 43.

In an embodiment, the memory device 43, also referred to as a data storage device, may include an electronic storage device, a magnetic storage device, an optical storage device, an electromagnetic storage device, a semiconductor storage device, or any suitable combination thereof. The memory device 43 may form, e.g., a hard disk drive (HDD), a solid state drive (SDD) or solid state integrated memory, a random access memory (RAM), a read-only memory (ROM), an erasable programmable read-only memory (EPROM or Flash memory), a static random access memory (SRAM), dynamic random access memory (DRAM), a portable compact disc read-only memory (CD-ROM), a digital versatile disk (DVD), and/or a memory stick.

The memory device 43 may store information that may be accessed by the processor 42. For instance, the memory device 43 may store data 44 that can be obtained, received, accessed, written, manipulated, created, and/or stored. The data 44 can include, for instance, any of the data or information described herein, including but not limited to thermal imaging data, detected board images, board classification data, and/or corrective action instruction data. In some implementations, the second computing system 40 can obtain data from one or more memories that are remote from the second computing system 40.

The memory device 43 may also store computer-readable instructions 45 that can be executed by the processor 42. The instructions 45 may be software written in any suitable programming language or can be implemented in hardware. The instructions 45 may include computer-readable instructions, computer-executable instructions, etc. As described herein, in various embodiments, the terms "computer-readable instructions" and "computer-executable instructions" are used to describe software instructions or computer code configured to carry out various tasks and operations. In various embodiments, if the computer-readable or computer-executable instructions form modules, the term "module" refers broadly to a collection of software instructions or code configured to cause the processor 42 to perform one or more functional tasks. The modules and computer-readable/executable instructions may be described as performing various operations or tasks when the processor 42 or other hardware component is executing the modules or computer-readable instructions.

The instructions 45 may be executed in logically and/or virtually separate threads on the processor 42. For example, the memory device 23 can store instructions 45 that when executed by the processor 42 cause the processor 42 to perform any of the operations, methods and/or processes described herein. In some cases, the memory device 43 may store computer-executable instructions or computer-readable instructions, such as instructions to perform at least a portion of the methods of FIGS. 11-14.

The second computing system 40 may store or otherwise include one or more machine-learned models 46 including the machine-learned defect detection model 172. The machine-learned models 46 may include or be the same as the models 26 stored in first computing system 20. In an embodiment, the machine-learned models 46 can include a supervised learning model or an unsupervised learning model. In an embodiment, the machine-learned models 46 can include neural networks (e.g., deep neural networks) or other types of machine-learned models, including non-linear models and/or linear models. Neural networks may include feed-forward neural networks, recurrent neural networks (e.g., long short-term memory recurrent neural networks), convolutional neural networks or other forms of neural networks. Some example machine-learned models may leverage an attention mechanism such as self-attention. For example, some example machine-learned models may include multi-headed self-attention models (e.g., transformer models).

The second computing system 40 may include a communication interface 49. The communication interface 49 may be used to communicate with one or more other systems. The communication interface 49 may include any circuits, components, software, etc. for communicating via one or more networks (e.g., networks 60). In some implementations, the communication interface 49 may include for example, one or more of a communications controller, receiver, transceiver, transmitter, port, conductors, software and/or hardware for communicating data/information.

The first computing system 20 and/or the second computing system 40 may train the models 26, 46 via interaction with a model trainer 47 that trains the machine-learned models 26, 46 stored at the first computing system 20 and/or the second computing system 40 using various training or learning techniques. The model trainer 47 can utilize training techniques, such as backwards propagation of errors. For example, a loss function may be backpropagated through a model to update one or more parameters of the models (e.g., based on a gradient of the loss function). Various loss functions may be used such as mean squared error, likelihood loss, cross entropy loss, hinge loss, and/or various other loss functions. Gradient descent techniques may be used to iteratively update the parameters over a number of training iterations.

In an embodiment, performing backwards propagation of errors may include performing truncated backpropagation through time. The model trainer 47 may perform a number of generalization techniques (e.g., weight decays, dropouts, etc.) to improve the generalization capability of a model being trained. In particular, the model trainer 47 may train the machine-learned models 26, 46 based on a set of training data 48.

In an embodiment, if consent/authorization has been provided, the training examples within training data 48 may be provided by the first computing system 20 and/or second computing system 40. Thus, in such implementations, a model 26 provided to the first computing system 20 may be trained by the model trainer 47 in a manner to personalize the model 26.

The model trainer 47 may include computer logic utilized to provide desired functionality. The model trainer 47 may be implemented in hardware, firmware, and/or software controlling a general-purpose processor. For example, in an embodiment, the model trainer 47 may include program files stored on a storage device, loaded into a memory, and executed by one or more processors. In other implementations, the model trainer 47 may include one or more sets of computer-executable instructions that are stored in a tangible computer-readable storage medium such as RAM, hard disk, or optical or magnetic media. In some implementations, the model trainer 47 can be implemented in a cloud-computing environment.

The machine-learned models described in this specification may have various types of input data and/or combinations thereof, representing data available to sensors and/or other systems onboard a vehicle. Input data can include, for example, latent encoding data (e.g., a latent space representation of an input, etc.), statistical data (e.g., data computed and/or calculated from some other data source), sensor data (e.g., raw and/or processed data captured by a linescanner or other image capture device), or other types of data.

FIG. 14 illustrates one example computing system that may be used to implement the present disclosure. Other computing systems may be used as well. For example, in an embodiment, the first computing system 20 may include the model trainer 47 and the training data 48. In such implementations, the models 26, 46 may be both trained and used locally at the first computing system 20. In some of such implementations, the first computing system 20 may implement the model trainer 47 to personalize the models 26.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components.

Further aspects of the invention are provided by the subject matter of the following clauses:
A computer-implemented method for detecting wallboard defects, the computer-implemented method comprising: accessing imaging data obtained from an imaging device configured to scan a wallboard; processing the imaging data with a machine-learned defect detection model, the machine-learned defect detection model having been trained to generate board classification data indicative of one or more classifications associated with the wallboard; and generating one or more corrective action instructions relative to the wallboard based on the board classification data generated by the machine-learned defect detection model.

The computer-implemented method of any preceding clause, wherein the imaging data obtained from the imaging device comprises thermal imaging data obtained from a linescanner.

The computer-implemented method of the preceding clause, wherein the thermal imaging data comprises temperature values for respective pixels of a two-dimensional scan of the wallboard.

The computer-implemented method of any preceding clause, wherein the board classification data is indicative of one or more classifications associated with the wallboard comprises a binary classification indicative of the wallboard being either defect-free or having a defect.

The computer-implemented method of any preceding clause, wherein the board classification data is indicative of one or more classifications associated with the wallboard comprises a multi-class classification indicative of the wallboard having a particular type of defect from a predefined group of defect types.

The computer-implemented method of the preceding clause, wherein the predefined group of defect types comprises a first blister type or a second blister type.

The computer-implemented method of any preceding clause, wherein the board classification data indicative of one or more classifications associated with the wallboard comprises a graphical representation associated with a detected defect.

The computer-implemented method of the preceding clause, wherein the graphical representation associated with the detected defect comprises a bounding shape encompassing the detected defect within the imaging data.

The computer-implemented method of any preceding clause, wherein the machine-learned defect detection model comprises a convolutional neural network.

The computer-implemented method of any preceding clause, the machine-learned defect detection model having been trained using supervised learning based on a set of training data, wherein the training data comprises pairs of wallboard imaging data and corresponding labels identifying an associated classification for the wallboard imaging data.

The computer-implemented method of any preceding clause, the machine-learned defect detection model having been trained using unsupervised learning based on a set of training data, wherein the training data comprises unlabeled wallboard imaging data, the machine-learned defect detection model having been trained to identify boards with defects as anomalies relative to non-defective boards.

The computer-implemented method of any preceding clause, further comprising: processing the imaging data with a board detection system configured to detect and localize individual board images within the imaging data; and wherein processing the imaging data with a machine-learned defect detection model comprises processing the individual board images with the machine-learned defect detection model.

The computer-implemented method of any preceding clause, wherein the one or more corrective action instructions relative to the wallboard comprises automatically diverting the wallboard into a waste area or an inspection area.

The computer-implemented method of any preceding clause, wherein the one or more corrective action instructions relative to the wallboard comprises automatically adjusting a step or parameter of a manufacturing process used to produce the wallboard.

Other aspects are directed to computer devices or systems for performing the method of any preceding clause. Other aspects are directed to a non-transitory computer-readable media that stores instructions for performing the method of any preceding clause.

A defect detection system for detecting wallboard defects, the defect detection system comprising:
a machine-learned defect detection model configured to process a board image that depicts a wallboard, the machine-learned defect detection model having been trained to generate board classification data indicative of one or more classifications associated with the wallboard.

The defect detection system of the preceding clause, further comprising: an imaging device configured to scan the wallboard and generate imaging data for the wallboard.

The defect detection system of the preceding clause, further comprising: a board detection system configured to process the imaging data and to detect and localize individual board images within the imaging data.

The defect detection system of any of the three preceding clauses, further comprising: a corrective action instruction system configured to generate one or more corrective action instructions relative to the wallboard based on the board classification data generated by the machine-learned defect detection model.

The defect detection system of the preceding clause, further comprising: further comprising: one or more mechanical or robotic components configured to execute the one or more corrective action instructions.

The defect detection system of any of the five preceding clauses, further comprising: a board dryer.

A special-purpose workstation computer configured to perform wallboard defect detection operations comprising: accessing imaging data obtained from an imaging device configured to scan a wallboard; processing the imaging data with a machine-learned defect detection model, the machine-learned defect detection model having been trained to generate board classification data indicative of one or more classifications associated with the wallboard; and generating one or more corrective action instructions relative to the wallboard based on the board classification data generated by the machine-learned defect detection model.

## Claims

1. A computer-implemented method for detecting wallboard defects, the computer-implemented method comprising:
accessing imaging data obtained from an imaging device configured to scan a wallboard;
processing the imaging data with a machine-learned defect detection model, the machine-learned defect detection model having been trained to generate board classification data indicative of one or more classifications associated with the wallboard; and
generating one or more corrective action instructions relative to the wallboard based on the board classification data generated by the machine-learned defect detection model.

2. The computer-implemented method of any preceding claim, wherein the imaging data obtained from the imaging device comprises thermal imaging data obtained from a linescanner.

3. The computer-implemented method of claim 2, wherein the thermal imaging data comprises temperature values for respective pixels of a two-dimensional scan of the wallboard.

4. The computer-implemented method of any preceding claim, wherein the board classification data is indicative of one or more classifications associated with the wallboard comprises a binary classification indicative of the wallboard being either defect-free or having a defect.

5. The computer-implemented method of any preceding claim, wherein the board classification data is indicative of one or more classifications associated with the wallboard comprises a multi-class classification indicative of the wallboard having a particular type of defect from a predefined group of defect types.

6. The computer-implemented method of claim 5, wherein the predefined group of defect types comprises a first blister type or a second blister type.

7. The computer-implemented method of any preceding claim, wherein the board classification data indicative of one or more classifications associated with the wallboard comprises a graphical representation associated with a detected defect.

8. The computer-implemented method of claim 7, wherein the graphical representation associated with the detected defect comprises a bounding shape encompassing the detected defect within the imaging data.

9. The computer-implemented method of any preceding claim, wherein the machine-learned defect detection model comprises a convolutional neural network.

10. The computer-implemented method of any preceding claim, the machine-learned defect detection model having been trained using supervised learning based on a set of training data, wherein the training data comprises pairs of wallboard imaging data and corresponding labels identifying an associated classification for the wallboard imaging data.

11. The computer-implemented method of any preceding claim, the machine-learned defect detection model having been trained using unsupervised learning based on a set of training data, wherein the training data comprises unlabeled wallboard imaging data, the machine-learned defect detection model having been trained to identify boards with defects as anomalies relative to non-defective boards.

12. The computer-implemented method of any preceding claim, further comprising: processing the imaging data with a board detection system configured to detect and localize individual board images within the imaging data; and wherein processing the imaging data with a machine-learned defect detection model comprises processing the individual board images with the machine-learned defect detection model.

13. The computer-implemented method of any preceding claim, wherein the one or more corrective action instructions relative to the wallboard comprises automatically diverting the wallboard into a waste area or an inspection area.

14. The computer-implemented method of any preceding claim, wherein the one or more corrective action instructions relative to the wallboard comprises automatically adjusting a step or parameter of a manufacturing process used to produce the wallboard.

15. A special-purpose workstation computer configured to perform wallboard defect detection operations comprising:
accessing imaging data obtained from an imaging device configured to scan a wallboard;
processing the imaging data with a machine-learned defect detection model, the machine-learned defect detection model having been trained to generate board classification data indicative of one or more classifications associated with the wallboard; and
generating one or more corrective action instructions relative to the wallboard based on the board classification data generated by the machine-learned defect detection model.
